# EUROPEAN PATENT APPLICATION

(11) **EP 2 431 890 A1**
(43) Date of publication of application: **21.03.2012**
(21) Application number: 10176768.9
(22) Date of filing: 15.09.2010
(51) Int. Cl.: G06F 17/30

(54) **Systems and methods for generating a search**

(71) Applicant: Research In Motion Limited, Waterloo, ON N2L 3W8 (CA)
(72) Inventor: Suman, Michael, Williams, Rolling Meadows, IL 60008 (US); Kaul, Bhavuk, Redwood City CA 94065-1183 (US)
(74) Representative: MERH-IP Matias Erny Reichl Hoffmann

(57) **Abstract**

The described embodiments relate generally to methods and systems for generating a search on an electronic device. The method includes receiving a multimedia object, determining metadata corresponding to the multimedia object and generating a search query corresponding to the metadata. The system includes an input interface configured to select a multimedia object, a metadata determining module configured to determine metadata associated with the multimedia object and a query generating module configured to generate a search query corresponding to the metadata. The electronic device may include a portable device where the search query is generated upon detection of the movement of the portable device.

## Description

### RELEVANT FIELD

The field of the disclosure relates generally to methods and systems for searching for data.

### BACKGROUND

In order to carry out a search, a search query is typically created and provided to a search engine, which carries out a search based on the instructions in the search query. Commonly, the search query is created by combining various characters (e.g. letters, numbers etc.), symbols (e.g. ampersand, asterisks etc.), words and other parameters, such as Boolean commands (e.g. AND, OR etc.).

### BRIEF DESCRIPTION OF THE DRAWINGS

For a better understanding of the described example embodiments and to show more clearly how they may be carried into effect, reference will now be made, by way of example, to the accompanying drawings in which:

**FIG. 1** is a block diagram of a mobile device in one example implementation;

**FIG. 2** is a block diagram of a communication subsystem component of the mobile device of **FIG. 1**;

**FIG. 3** is a block diagram of a node of a wireless network;

**FIG. 4** is a block diagram of a searching system according to an embodiment;

**FIG. 5** is a schematic illustration of metadata contained in a word processing document, according to an embodiment;

**FIG. 6A** illustrates a digital image file in a JPEG format;

**FIG. 6B** is a schematic illustration of metadata associated with the image file of **FIG. 6A**, according to an embodiment;

**FIG. 7A** illustrates a screenshot of various types of multimedia objects that may be selected to be searched by the searching system.

**FIGS. 7B to 7D** illustrate screenshots demonstrating various ways of selecting multimedia objects to be searched by the searching system;

**FIG. 8** illustrates the multimedia objects selected for search by the searching system and the metadata associated with the selected multimedia objects, according to an embodiment;

**FIG. 9** illustrates an example of a search query generated for the selected multimedia objects of **FIG. 8****;**

**FIG. 10** illustrates examples of search results corresponding to the search query of **FIG. 9**; and

**FIG. 11** is a flowchart of a method for generating a search according to one embodiment.

### DETAILED DESCRIPTION

Embodiments described herein are generally directed to methods and systems for generating a search.

In one broad aspect, a method for generating a search is provided. The method includes receiving at least one multimedia object from an input interface; determining metadata associated with the multimedia object; and generating a search query corresponding to the metadata.

The multimedia object may include a graphic object, such as an image file and may also include an audio file or a video file.

The method for generating a search may also include communicating the search query to at least one search engine. The search engine may be an external search engine (e.g. Google™, Yahoo!™ etc.). It may also be an internal search engine. An internal search engine may include a database or an application (e.g. e-mail, address book etc.).

In addition to communicating the search query to a search engine, the method for generating a search may also include receiving at least one search result from the search engine, wherein the search result corresponds to the search query.

The method for generating a search may also comprise filtering the received search results based on filtering criteria. Such filtering criteria may either be pre-determined, or user customizable, or a combination of both.

All embodiments of the method for generating a search may be configured for use on a portable device. In these embodiments, the method for generating a search may include detecting movement of the portable device.

In some examples, the method for generating a search may include the generation of a search query upon the detection of the movement of the device. In other examples, the method for generating a search may include the communication of the generated search query to the search engine upon the detection of the movement of the device.

The portable device may be a mobile device (e.g. a cell phone etc.).

In another broad aspect, there is provided a searching system. The searching system includes a processor configured to control operations of the searching system; an input interface, configured to select at least one multimedia object; a metadata determining module configured to determine metadata associated with the multimedia object; and a query generating module configured to generate a search query corresponding to the metadata.

The searching system may also include a communication module coupled to the query generating module, wherein the communication module is configured to communicate the search query to at least one search engine.

In addition to communicating the search query to a search engine, the communication module may be further configured to receive at least one search result, corresponding to the search query, from the search engine.

The searching system may also include a filtering module coupled to the communication module, wherein the filtering module is configured to filter the received search result based on filtering criteria. The filtering criteria may either be pre-determined, or user customizable, or a combination of both.

All embodiments of the searching system may be configured for operation on a portable device. The portable device may include a mobile device (e.g. a cell phone etc.).

The searching system may also include a motion detector configured to detect movement of the portable device. In some examples, the query generating module may be configured to generate the search query upon the detection of the movement of the device. In other examples, the communication module may be configured to communicate the search query to at least one search engine upon the detection of the movement of the device. The movement of the device may include shaking of the device.

The motion detector may include an accelerometer.

In some embodiments, the searching system may include a web browser and/or a plug-in to a web browser.

These and other aspects and features of various embodiments will be described in greater detail below.

Some embodiments of the system and methods described herein make reference to a portable device. A portable device may include a mobile device. A mobile device may be a two-way communication device with advanced data communication capabilities having the capability to communicate with other computer systems. A mobile device may also include the capability for voice communications. Depending on the functionality provided by a mobile device, it may be referred to as a data messaging device, a two-way pager, a cellular telephone with data messaging capabilities, a wireless Internet appliance, or a data communication device (with or without telephony capabilities), for example. A mobile device may communicate with other devices through a network of transceiver stations.

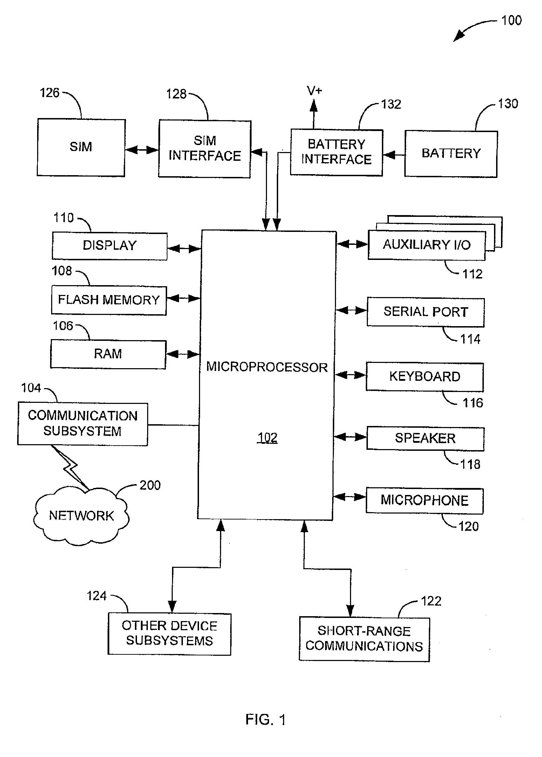

To aid the reader in understanding the structure of a mobile device and how it communicates with other devices, reference is made to **FIGS. 1** through **3****.**

Referring first to **FIG. 1**, a block diagram of a mobile device in one example implementation is shown generally as **100**. Mobile device **100** comprises a number of components, the controlling component being microprocessor **102**. Microprocessor **102** controls the overall operation of mobile device **100**. Communication functions, including data and voice communications, may be performed through communication subsystem **104**. Communication subsystem 104 may be configured to receive messages from and send messages to a wireless network **200**. In one example implementation of mobile device **100**, communication subsystem **104** may be configured in accordance with the Global System for Mobile Communication (GSM) and General Packet Radio Services (GPRS) standards. The GSM/GPRS wireless network is used worldwide and it is expected that these standards may be supplemented or superseded eventually by Enhanced Data GSM Environment (EDGE) and Universal Mobile Telecommunications Service (UMTS), and Ultra Mobile Broadband (UMB), etc. New standards are still being defined, but it is believed that they will have similarities to the network behaviour described herein, and it will also be understood by persons skilled in the art that the embodiments of the present disclosure are intended to use any other suitable standards that are developed in the future. The wireless link connecting communication subsystem **104** with network **200** represents one or more different Radio Frequency (RF) channels, operating according to defined protocols specified for GSM/GPRS communications. With newer network protocols, these channels are capable of supporting both circuit switched voice communications and packet switched data communications.

Although the wireless network associated with mobile device **100** is a GSM/GPRS wireless network in one example implementation of mobile device **100**, other wireless networks may also be associated with mobile device **100** in variant implementations. Different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some older examples of data-centric networks include the Mobitex™ Radio Network and the DataTAC™ Radio Network. Examples of older voice-centric data networks include Personal Communication Systems (PCS) networks like GSM and Time Division Multiple Access (TDMA) systems. Other network communication technologies that may be employed include, for example, Integrated Digital Enhanced Network (iDEN™), Evolution-Data Optimized (EV-DO), and High Speed Packet Access (HSPA), etc.

Microprocessor **102** may also interact with additional subsystems such as a Random Access Memory (RAM) **106**, flash memory 108, display **110**, auxiliary input/output (I/O) subsystem **112**, serial port **114**, keyboard **116**, speaker **118**, microphone **120**, short-range communications subsystem **122** and other device subsystems **124**.

Some of the subsystems of mobile device **100** perform communication-related functions, whereas other subsystems may provide "resident" or on-device functions. By way of example, display **110** and keyboard **116** may be used for both communication-related functions, such as entering a text message for transmission over network **200**, as well as device-resident functions such as a calculator or task list. Operating system software used by microprocessor **102** is typically stored in a persistent store such as flash memory 108, which may alternatively be a read-only memory (ROM) or similar storage element (not shown). Those skilled in the art will appreciate that the operating system, specific device applications, or parts thereof, may be temporarily loaded into a volatile store such as RAM **106**.

Mobile device **100** may send and receive communication signals over network **200** after network registration or activation procedures have been completed. Network access may be associated with a subscriber or user of a mobile device **100**. To identify a subscriber, mobile device **100** may provide for a Subscriber Identity Module ("SIM") card **126** to be inserted in a SIM interface **128** in order to communicate with a network. SIM **126** may be one example type of a conventional "smart card" used to identify a subscriber of mobile device **100** and to personalize the mobile device **100**, among other things. Without SIM **126**, mobile device **100** may not be fully operational for communication with network **200**. By inserting SIM **126** into SIM interface **128**, a subscriber may access all subscribed services. Services may include, without limitation: web browsing and messaging such as e-mail, voice mail, Short Message Service (SMS), and Multimedia Messaging Services (MMS). More advanced services may include, without limitation: point of sale, field service and sales force automation. SIM **126** may include a processor and memory for storing information. Once SIM **126** is inserted in SIM interface **128**, it may be coupled to microprocessor **102**. In order to identify the subscriber, SIM **126** may contain some user parameters such as an International Mobile Subscriber Identity (IMSI). By using SIM **126**, a subscriber may not necessarily be bound by any single physical mobile device. SIM **126** may store additional subscriber information for a mobile device as well, including datebook (or calendar) information and recent call information.

Mobile device **100** may be a battery-powered device and may comprise a battery interface **132** for receiving one or more rechargeable batteries 130. Battery interface **132** may be coupled to a regulator (not shown), which assists battery **130** in providing power V+ to mobile device **100**. Although current technology makes use of a battery, future technologies such as micro fuel cells may provide power to mobile device **100**. In some embodiments, mobile device 100 may be solar-powered.

Microprocessor **102**, in addition to its operating system functions, enables execution of software applications on mobile device **100**. A set of applications that control basic device operations, including data and voice communication applications, may be installed on mobile device **100** during its manufacture. Another application that may be loaded onto mobile device **100** is a personal information manager (PIM). A PIM has functionality to organize and manage data items of interest to a subscriber, such as, but not limited to, e-mail, calendar events, voice mails, appointments, and task items. A PIM application has the ability to send and receive data items via wireless network **200**. PIM data items may be seamlessly integrated, synchronized, and updated via wireless network **200** with the mobile device subscriber's corresponding data items stored and/or associated with a host computer system. This functionality may create a mirrored host computer on mobile device **100** with respect to such items. This can be particularly advantageous where the host computer system is the mobile device subscriber's office computer system.

Additional applications may also be loaded onto mobile device **100** through network **200**, auxiliary I/O subsystem **112**, serial port **114**, short-range communications subsystem **122**, or any other suitable subsystem **124**. This flexibility in application installation increases the functionality of mobile device **100** and may provide enhanced on-device functions, communication-related functions, or both. For example, secure communication applications may enable electronic commerce functions and other such financial transactions to be performed using mobile device **100**.

Serial port **114** enables a subscriber to set preferences through an external device or software application and extends the capabilities of mobile device **100** by providing for information or software downloads to mobile device **100** other than through a wireless communication network. The alternate download path may, for example, be used to load an encryption key onto mobile device 100 through a direct and thus reliable and trusted connection to provide secure device communication.

Short-range communications subsystem **122** provides for communication between mobile device **100** and different systems or devices, without the use of network **200**. For example, subsystem **122** may include an infrared device and associated circuits and components for short-range communication. Examples of short range communication include standards developed by the Infrared Data Association (IrDA), Bluetooth^{®}, and the 802.11 family of standards (Wi-Fi^{®}) developed by IEEE.

In use, a received signal such as a text message, an e-mail message, or web page download is processed by communication subsystem **104** and input to microprocessor **102**. Microprocessor **102** then processes the received signal for output to display **110** or alternatively to auxiliary I/O subsystem **112**. A subscriber may also compose data items, such as e-mail messages, for example, using keyboard **116** in conjunction with display **110** and possibly auxiliary I/O subsystem **112**. Auxiliary subsystem **112** may include devices such as: a touch screen, mouse, track ball, optical trackpad infrared fingerprint detector, or a roller wheel with dynamic button pressing capability. Keyboard **116** may comprise an alphanumeric keyboard and/or telephone-type keypad, for example. A composed item may be transmitted over network **200** through communication subsystem **104**.

For voice communications, the overall operation of mobile device 100 may be substantially similar, except that the received signals may be processed and output to speaker **118**, and signals for transmission may be generated by microphone **120**. Alternative voice or audio I/O subsystems, such as a voice message recording subsystem, may also be implemented on mobile device **100**. Although voice or audio signal output is accomplished primarily through speaker **118**, display **110** may also be used to provide additional information such as the identity of a calling party, duration of a voice call, or other voice call related information.

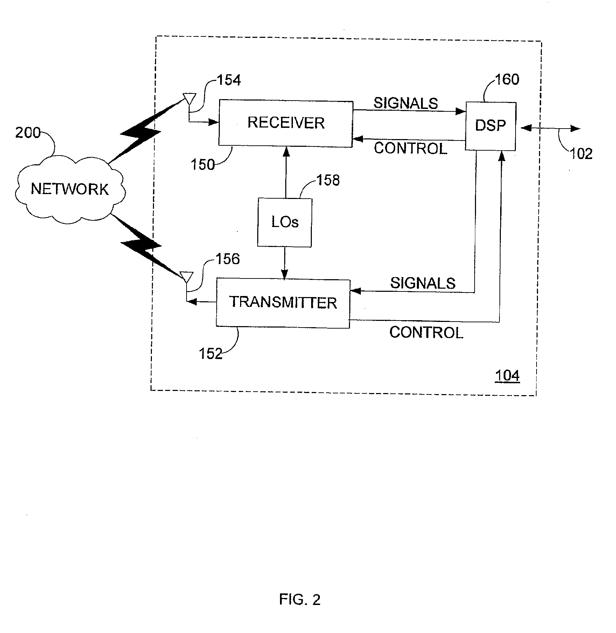

Referring now to **FIG. 2**, a block diagram of the communication subsystem component **104** of **FIG. 1** is shown. Communication subsystem **104** may comprise a receiver **150**, a transmitter **152**, one or more embedded or internal antenna elements **154**, **156**, Local Oscillators (LOs) **158**, and a processing module such as a Digital Signal Processor (DSP) **160**.

The particular design of communication subsystem **104** is dependent upon the network **200** in which mobile device **100** is intended to operate; thus, it should be understood that the design illustrated in **FIG. 2** serves only as one example. Signals received by antenna **154** through network **200** are input to receiver **150**, which may perform such common receiver functions as signal amplification, frequency down conversion, filtering, channel selection, and analog-to-digital (A/D) conversion. A/D conversion of a received signal allows more complex communication functions such as demodulation and decoding to be performed in DSP **160**. In a similar manner, signals to be transmitted are processed, including modulation and encoding, by DSP **160**. These DSP-processed signals are input to transmitter **152** for digital-to-analog (D/A) conversion, frequency up conversion, filtering, amplification and transmission over network **200** via antenna **156**. DSP **160** not only processes communication signals, but also provides for receiver and transmitter control. For example, the gains applied to communication signals in receiver **150** and transmitter **152** may be adaptively controlled through automatic gain control algorithms implemented in DSP **160**.

The wireless link between mobile device **100** and a network **200** may contain one or more different channels, typically different RF channels, and associated protocols used between mobile device **100** and network **200**. A RF channel is generally a limited resource, typically due to limits in overall bandwidth and limited battery power of mobile device **100**.

When mobile device **100** is fully operational, transmitter **152** may be typically keyed or turned on only when it is sending to network **200** and may otherwise be turned off to conserve resources. Similarly, receiver **150** may be periodically turned off to conserve power until it is needed to receive signals or information (if at all) during designated time periods.

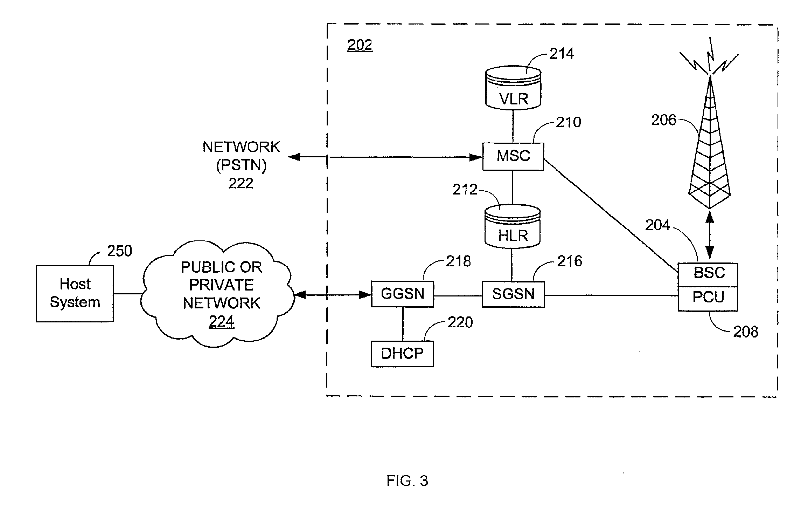

Referring now to **FIG. 3****,** a block diagram of a node of a wireless network is shown as **202**. In practice, network **200** comprises one or more nodes **202**. Mobile device **100** communicates with a node **202** within wireless network **200**. In the example implementation of **FIG. 3**, node **202** is configured in accordance with GPRS and GSM technologies; however, in other embodiments, different standards may be implemented as discussed in more detail above. Node **202** includes a base station controller (BSC) **204** with an associated tower station **206**, a Packet Control Unit (PCU) **208** added for GPRS support in GSM, a Mobile Switching Center (MSC) **210**, a Home Location Register (HLR) **212**, a Visitor Location Registry (VLR) **214**, a Serving GPRS Support Node (SGSN) **216**, a Gateway GPRS Support Node (GGSN) **218**, and a Dynamic Host Configuration Protocol (DHCP) server **220**. This list of components is not meant to be an exhaustive list of the components of every node **202** within a GSM/GPRS network, but rather a list of components that are commonly used in communications through network **200**.

In a GSM network, MSC **210** is coupled to BSC **204** and to a landline network, such as a Public Switched Telephone Network (PSTN) **222** to satisfy circuit switched requirements. The connection through PCU **208**, SGSN **216** and GGSN **218** to the public or private network (Internet) **224** (also referred to herein generally as a shared network infrastructure) represents the data path for GPRS capable mobile devices. In a GSM network extended with GPRS capabilities, BSC **204** also contains a Packet Control Unit (PCU) **208** that connects to SGSN **216** to control segmentation, radio channel allocation and to satisfy packet switched requirements. To track mobile device location and availability for both circuit switched and packet switched management, HLR **212** is shared between MSC **210** and SGSN **216**. Access to VLR **214** is controlled by MSC **210**.

Station **206** may be a fixed transceiver station. Station **206** and BSC 204 together may form the fixed transceiver equipment. The fixed transceiver equipment provides wireless network coverage for a particular coverage area commonly referred to as a "cell". The fixed transceiver equipment transmits communication signals to and receives communication signals from mobile devices within its cell via station **206**. The fixed transceiver equipment normally performs such functions as modulation and possibly encoding and/or encryption of signals to be transmitted to the mobile device in accordance with particular, usually predetermined, communication protocols and parameters, under control of its controller. The fixed transceiver equipment similarly demodulates and possibly decodes and decrypts, if necessary, any communication signals received from mobile device **100** within its cell. Communication protocols and parameters may vary between different nodes. For example, one node may employ a different modulation scheme and operate at different frequencies than other nodes.

For all mobile devices **100** registered with a specific network, permanent configuration data such as a user profile may be stored in HLR **212**. HLR **212** may also contain location information for each registered mobile device and can be queried to determine the current location of a mobile device. MSC **210** is responsible for a group of location areas and stores the data of the mobile devices currently in its area of responsibility in VLR **214**. Further VLR **214** also contains information on mobile devices that are visiting other networks. The information in VLR **214** includes part of the permanent mobile device data transmitted from HLR **212** to VLR **214** for faster access. By moving additional information from a remote HLR **212** node to VLR **214**, the amount of traffic between these nodes can be reduced so that voice and data services can be provided with faster response times while requiring less use of computing resources.

SGSN **216** and GGSN **218** are elements that may be added for GPRS support; namely packet switched data support, within GSM. SGSN **216** and MSC **210** have similar responsibilities within wireless network **200** by keeping track of the location of each mobile device **100**. SGSN **216** also performs security functions and access control for data traffic on network **200**. GGSN **218** provides internetworking connections with external packet switched networks and connects to one or more SGSNs **216** via an Internet Protocol (IP) backbone network operated within the network **200**. During normal operations, a given mobile device **100** performs a "GPRS Attach" to acquire an IP address and to access data services. This normally is not present in circuit switched voice channels as Integrated Services Digital Network (ISDN) addresses may be generally used for routing incoming and outgoing calls. Currently, GPRS capable networks may use private, dynamically assigned IP addresses, thus requiring a DHCP server **220** connected to the GGSN **218**. There are many mechanisms for dynamic IP assignment, including using a combination of a Remote Authentication Dial-In User Service (RADIUS) server and DHCP server, for example. Once the GPRS Attach is complete, a logical connection is established from a mobile device **100**, through PCU **208**, and SGSN **216** to an Access Point Node (APN) within GGSN **218**, for example. The APN represents a logical end of an IP tunnel that can either access direct Internet compatible services or private network connections. The APN also represents a security mechanism for network **200**, insofar as each mobile device **100** must be assigned to one or more APNs and mobile devices **100** cannot generally exchange data without first performing a GPRS Attach to an APN that it has been authorized to use. The APN may be considered to be similar to an Internet domain name such as "myconnection.wireless.com".

Once the GPRS Attach is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network 200. To maximize use of the PDP Contexts, network **200** will run an idle timer for each PDP Context to determine if there is a lack of activity. When a mobile device **100** is not using its PDP Context, the PDP Context can be deallocated and the IP address returned to the IP address pool managed by DHCP server 220.

In order to carry out a search, a user typically creates a search query to be entered into a search engine. The search query can be as simple as a single word, or it can be an intricate combination of characters (e.g. letters, numbers etc.) and symbols (e.g. ampersand, quotation marks etc.). As people skilled in the art will understand, the characters, words, phrases or sentences that are the subject of the search are known as 'keywords'.

In order to build a search query, a few commands defining the relationship between the keywords are commonly used. These commands are known as Boolean operators. The most widely used Boolean operators include: AND, OR and NOT. In a single search query of two keywords, the term AND narrows the search by locating results that contain both the keywords. The term OR retrieves results containing either or both of the keywords listed in the single two keyword search query. The term NOT excludes results that contain the undesired keyword or keywords. Some other examples of Boolean operators may include terms such as NEAR, and symbols such as () (round brackets), "" (quotation marks) etc.

Search queries are widely used to carry out a search on the Internet using Internet search engines, which are special websites designed to help find information stored on other sites on the web. The information sought may be a webpage, an image, a word processing document, or a result in any other format. Some of the widely used Internet search engines include Google™, Yahoo!™, Bing™, MSN™ etc., which may be accessed using a web browser. A web browser may be defined as a software application used for retrieving, presenting, and traversing information resources on the Internet. Some examples of web browsers include Firefox, Internet Explorer, Chrome, and Safari etc.

Search engines work typically by using special software called 'spiders' to constantly visit other websites or webpages and to extract data from them. The extracted data is then indexed and stored in local databases of each search engine. The indexing involves stripping content and key elements from the webpages. By way of an example, the content that may be indexed may include: words in the title and sub-headings, internal links found on the webpage, 100 most frequently used words on the webpage and each word in the first 20 lines of text. Some search engines may also assign a weight to each indexed entry based on factors such as its location and its frequency. For instance, a heavy weight may be assigned to words appearing near the top of the document or in the title. Each search engine may have different formulae for determining the weight to be assigned.

In response to a provided search query, the search engine then sorts through millions of pages in its database to yield search results in the order of relevancy, where the order may be determined by the weight assigned to the indexed results. Since each search engine has a different way of indexing and a different formula for assigning weight to the indexed results, each search engine produces a different list with results in different order.

In situations where one or more items need to be searched, creating a search query may be difficult, especially for those who are not technologically savvy. Creating a search query may also be difficult when a user has limited keypad or keyboard capabilities. In addition, when keywords being used are lengthy or complicated, the probability of misspelling or mistyping keywords may also be high. Accordingly, a lot of time may be wasted in recreating search queries yielding desirable results. If the quality of the search query itself is poor, the Internet search engines may return thousands of results and the task of finding relevant information can sometimes be as daunting as locating a needle in a haystack. Also, it may be very time consuming to peruse through the search results in an attempt to locate the desired results.

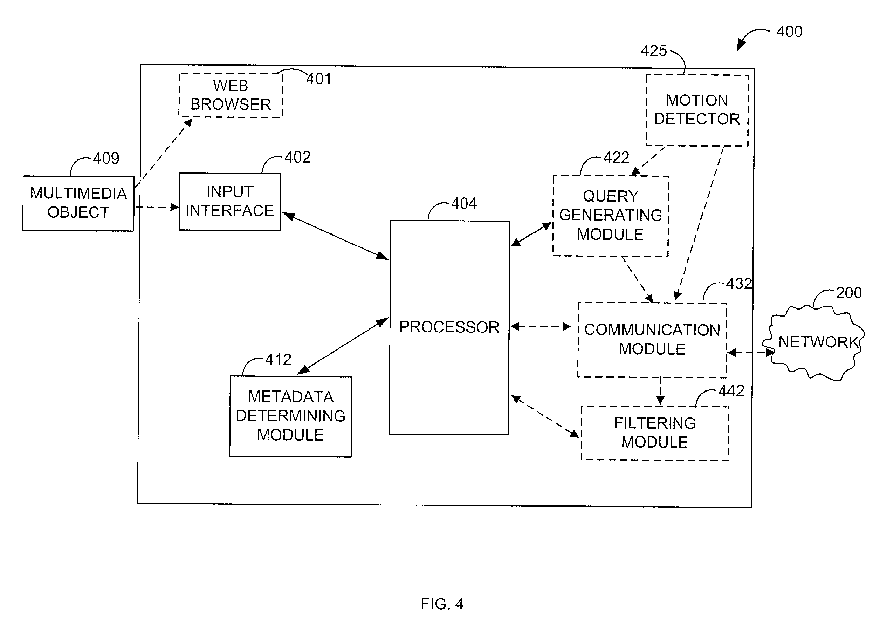

**FIG. 4** illustrates a searching system **400** according to an embodiment. In this embodiment, the searching system 400 may be provided with an input interface **402**, a metadata determining module **412**, a query generating module **422** and a processor **404**. The searching system **400** may also include a web browser **401**, or a plug-in to a web browser. A plug-in is a set of software components that adds specific capabilities to a larger software application, such as a web browser. A plug-in allows third party developers to add new features to the application. For example, plug-ins are commonly used in web browsers to scan for viruses, to play videos etc.

The searching system **400** may be configured to operate on the mobile device **100**. However, it will be understood by persons skilled in the art that some embodiments of the searching system **400** may be implemented on other electronic devices that enable web browsing. Some examples of such electronic devices may include a desktop or a laptop computer.

The processor **404**, such as the microprocessor **102** of the mobile device **100**, may be configured to control operations of the searching system **400**. The input interface **402**, may be configured to receive one or more items to be searched. The metadata determining module **412** may be configured to determine metadata associated with the input items. The query generating module **422** may be configured to generate a search query corresponding to the metadata.

The input interface **402**, configured to receive one or more multimedia objects to be searched, may comprise the web browser **401**, or parts of the web browser functionally. The input interface **402** may also include or be operatively coupled to various elements of the mobile device **100**. For instance, the input interface **402** may include or may be operatively coupled to the keyboard **116** or one or more of the user input components in the auxiliary I/O subsystem **112**, such as a thumbwheel, trackball, directional pad, joystick, or touchscreen which enable the user to select or otherwise generate user input received by the processor **404**. In some embodiments, the input interface **402** may be operatively coupled to the display **110**.

The input received from the input interface **402** may be one or more multimedia objects **409**. As persons skilled in the art will appreciate that a multimedia object **409**, in a broad context, is understood to be content that may use a combination of other content forms. Accordingly, a multimedia object **409** may include audio content, video content, still images (including picture images or non-picture images such as an emoticon), graphics, animations, text or a combination of any of the above.

The multimedia object **409** may be received from the web browser **401** by a simple cut-paste or copy-paste action. The multimedia object **409** may also be received by dragging and dropping the object. Typically, a thumbnail image or an icon representing the multimedia object **409** may be used to select the object. A thumbnail image may be understood as a miniature representation of the multimedia objects **409**, such as an image, that may be used to quickly identify and link to the corresponding full-sized objects. Shortcut commands (such as, command-X/command-C for cut/copy and command-V for paste etc.) may also be used to realize the same effect.

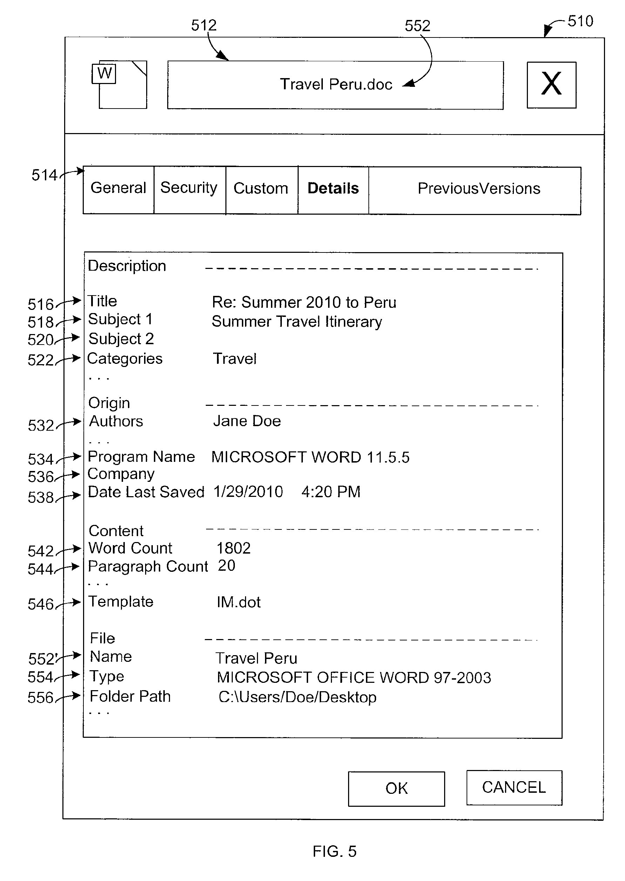

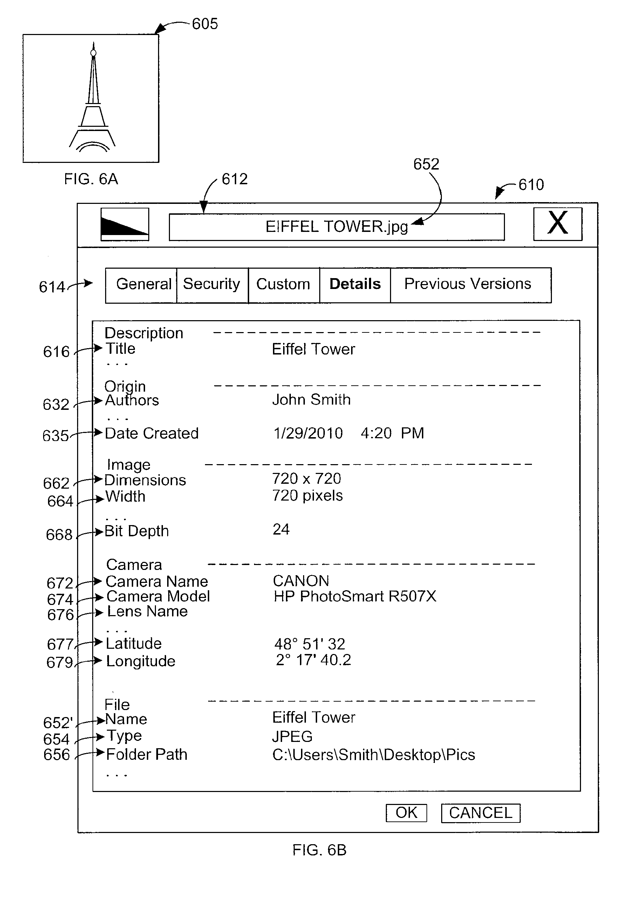

The metadata determining module **412** is configured to determine metadata associated with the multimedia objects **409**. In simple terms, metadata is simply "data about data" and it describes attributes of the multimedia objects, such as title, author, content, location, and date of creation etc. In some cases, metadata may only include the name of the multimedia object. **FIGS. 5** **and** **6B** illustrate, according to an example, the metadata contained in two common file types, namely a word processing document, such as a document **552** of **FIG. 5**, and a digital image file, such as a file **652** of **FIG. 6B**.

**FIG. 5** schematically illustrates metadata as may be associated with the word processing document **552**. Some metadata can be easily viewed by simply scanning the properties of the document. For instance, for a Microsoft Office Word™ document, file properties can be viewed by using Document Information Panel, which displays at the top of the document in the Office program. By selecting the 'File' tab, a drop down list with various options is made available. By selecting 'Properties' from that list, a dialog box **510**, becomes available. The dialog box **510** may indicate the name of the file **552** at the top, as shown by panel **512**. The example in the figure shows the metadata available under the 'Details' tab. However, any other tab, such as 'General' 'Security', 'Custom' or 'Previous Versions' may be selected from the panel **514**. As seen from the figure, some commonly found metadata fields may include: Title **516**, Subject1 **518**, Subject2 **520**, Categories **522**, Authors **532**, Program Name **534**, Company **536**, Date Last Saved **538**, Word Count **542**, Paragraph Count **544**, Template **546**, Name **552**', Type **554** and Folder Path **556**. While some metadata fields may have a corresponding entry, it is very likely that not all metadata fields are populated.

In most cases, the word processing documents also contain some hidden metadata that is not easily viewable or editable. Such metadata may include information such as: the server on which the document is saved, names of previous users of the document, comments by previous reviewers of the document, various printing locations available to the document etc.

A digital image, such as the digital image **605** of **FIG. 6A**, representing the image of the Eiffel Tower, may include metadata describing how large the picture is, image resolution, date and time of creation, camera creating the image, color depth and other data. There exist many formats in which a digital image may be captured and stored. Some examples of image formats include JPEG (Joint Photographic Experts Group), PNG (Portable Network Graphics), BMP (Windows Bitmap) and GIF (Graphics Interchange Format). Metadata in JPEGs follow an open standard known as EXIF (Exchangeable Image File Format). **FIG. 6B** schematically illustrates metadata (in EXIF format) associated with the digital image file **652**, containing the digital image **605** in JPEG format. The metadata can be viewed by accessing the properties of the digital image when the device containing the searching system **400** is operating on a Windows™ operating system. The properties for an image in a JPEG format may be viewed by "right clicking" on the digital image and selecting 'Properties' from the drop down list. Element **610** refers to a dialog box that may result upon selecting the 'Properties' option. As illustrated, the dialog box **610** may indicate the name of the file **652** at the top, as depicted by panel **612**. While the example in **FIG. 6B** shows the metadata available under the 'Details' tab, any other tab, such as 'General' 'Security', 'Custom' or 'Previous Versions' may be selected from the panel **614.**

Assuming that the JPEG image of the Eiffel Tower 605 is captured with a camera, some common metadata fields may include: Title **616**, Authors **632**, Date Created **635**, Dimensions **662**, Width **664**, Bit Depth **668**, Camera Name **672**, Camera Model **674**, Lens Name **676**, Latitude **677**, Longitude **679**, Name **652'**, Type **654** and Folder Path **656**. The metadata fields latitude **677** and longitude **679** represent the latitude and longitude of the location where the image was captured. Some other examples of metadata fields, not shown, may include shutter speed, orientation, compression, and the date and time the image was last opened.

Metadata may be found in almost all electronic content files, such as PDF (Portable Document Format) documents, e-mails, audio or video clips, emoticons and even thumbnails etc. In some instances, metadata may be created automatically, while in other instances, it can be manually populated. In the case of a digital image created by a camera, some metadata may be written by the camera itself and some by the software used for downloading the image to an electronic device.

In some embodiments, metadata may be determined by the metadata determining module **412** by accessing the properties data of the multimedia objects **409**, as illustrated above in **FIGS. 5** **and** **6B**. In some other embodiments, third party software applications, such as MetaViewer™ by Pinpoint Labs, Metadata Extraction Tool™ by National Library of New Zealand etc., may be used to scan and identify metadata associated with the multimedia objects **409**. As will be discussed in greater detail below, metadata for the selected multimedia objects **409** may be used by the query generating module 422 to create search queries.

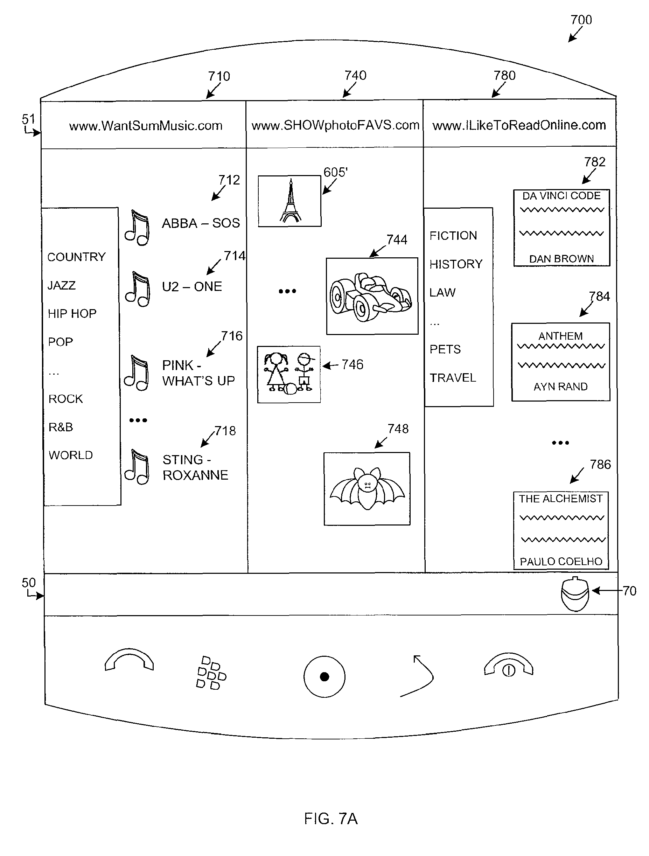

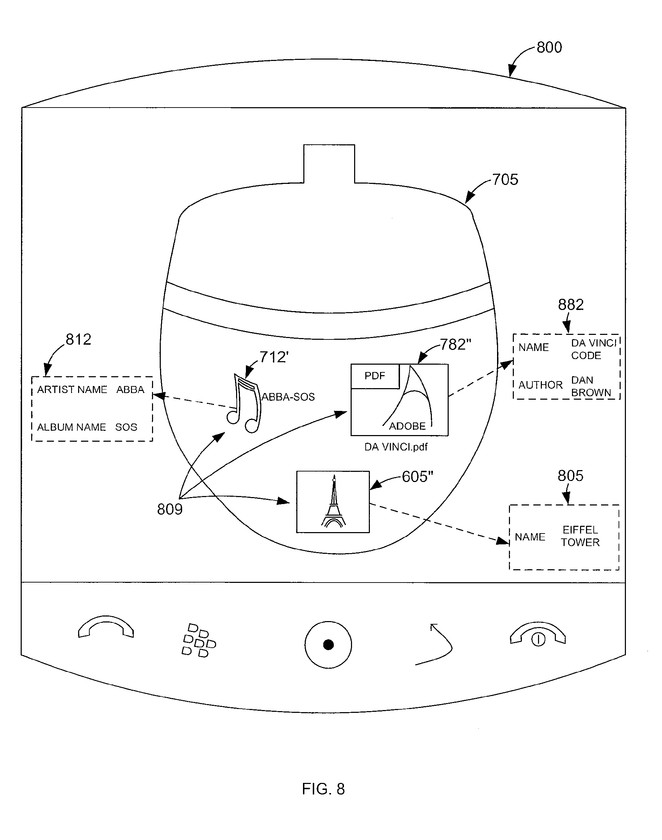

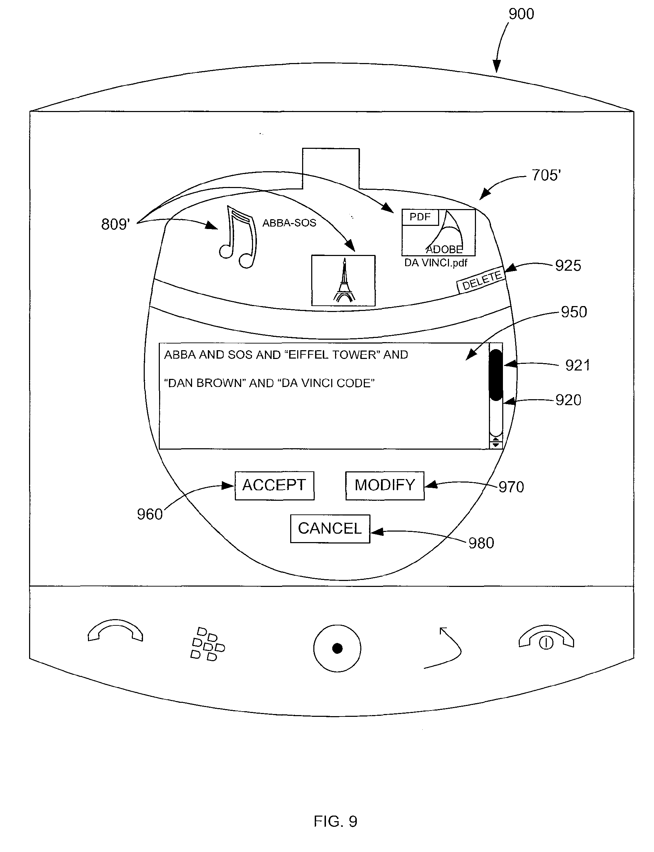

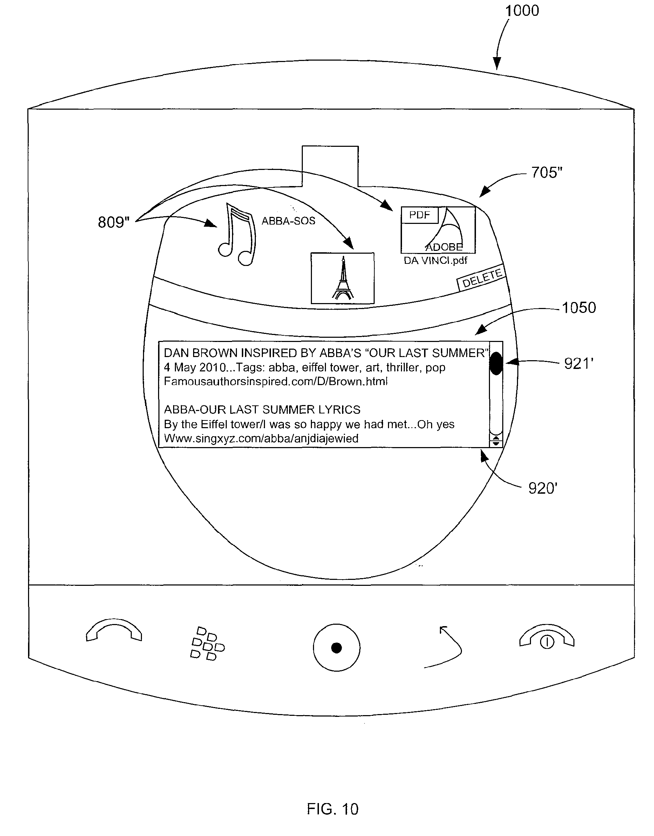

**FIGS. 7A to 7D** illustrate example screen shots of various types of multimedia objects **409** that may be selected for search by the searching system **400**, and various ways of selecting them. **FIG. 8** illustrates an example of selected multimedia objects **809** and the associated metadata that may be used by the query generating module **422** to generate a search query. **FIG. 9** illustrates an example of a search query generated for the selected multimedia objects **809**' and **FIG. 10** illustrates examples of received search results for the selected multimedia objects 809".

**FIG. 7A** illustrates some examples of the multimedia objects **409** that may be selected for search in the searching system **400**. Element **700** depicts a mobile device, such as the mobile device **100**, having web browsing capabilities. In this example, the display **110** of the mobile device **700** is divided into three web pages, with each web page accessing different websites from which multimedia objects **409** may be selected.

Web page **710** depicts a music website, which contains audio files such as music files, other sound files etc. Some common audio file formats may include MP3 audio file (.mp3), MPEG-2 audio file (.mpa), Real audio file (.ra), Wave audio file (.wav), Windows Media Audio File (.wma), and Audio Interchange File Format (.aiff). The audio content may be displayed in the form of 'Artist name or Band name', followed by the 'Song name'. Some examples, as shown, may include ABBA-Sos **712**, U2-One **714**, PINK-What's Up **716** and STING-Roxanne **718**.

Web page **740** depicts an images website, which contains digital image files. As mentioned above, some common image file formats may include a Bitmap Image file (.bmp), a JPEG image file (.jpg), a Graphical Interchange Format File (.gif) etc. An image file format may also include a Thumbnail Image File (.tif) or a Drawing File (.drw). Some examples, as shown, may include image of the 'Eiffel Tower' **605**', a car **744**, people playing soccer **746** and a bat **748**.

Another type of multimedia object, such as PDF documents, may be selected from a website, as depicted by web page **780**, which contains electronic books or novels. For the purposes of this illustration, it is assumed that the content is legally downloadable from this website. As shown in **FIG. 7A**, the electronic books may appear as thumbnails of book covers on the main page, but the thumbnails may be linked to other web pages where more information about the actual books may be found, or from where the actual books may be downloaded. These other web pages may be accessed by clicking on the thumbnails. Some examples of electronic book cover thumbnails, as shown in **FIG. 7A**, may include the Da Vinci Code by Dan Brown **782**, Anthem by Ayn Rand **784** and The Alchemist by Paulo Coelho **786**.

The input interface **402** may be customized so that various websites from which multimedia objects **409** may be selected may be accessed simultaneously, as depicted in the example in **FIG. 7A****.** On the other hand, the websites may be accessed one after another, where only one website is viewed at a given time.

In some examples, the searching system **400** may only receive one multimedia object at a time, in which case the object once selected is provided to the searching system **400** before another object can be selected. In other examples, the searching system **400** may receive more than one multimedia object simultaneously.

While this example focuses on the selection of multimedia objects 409 from various websites, the multimedia objects **409** may be selected from a wide array of other sources. Some examples of the other sources may include data files created and or used in applications, such as e-mail, camera, music etc. stored on an electronic device. For instance, audio files, such as music files, may be stored on and selected from a media application on the mobile device **100**, or from a 'music' folder on a laptop or desktop. Images, such as pictures, may be stored on and selected from the camera application on the mobile device **100**, or from a 'pictures' folder on a laptop or desktop.

In cases where the searching system **400** is implemented as a web browser **401** or a plug-in to a web browser, an icon representing the searching system **400** may be available to facilitate the receiving of the multimedia objects 409 by the searching system **400**. In some embodiments, as illustrated in **FIG. 7A**, the input interface **402** of the searching system **400** may be a split screen, such that the top section of the split screen 51 contains various websites or applications that the user may wish to browse, and the lower section of the split screen **50** may contain the icon **70** representing the searching system **400**.

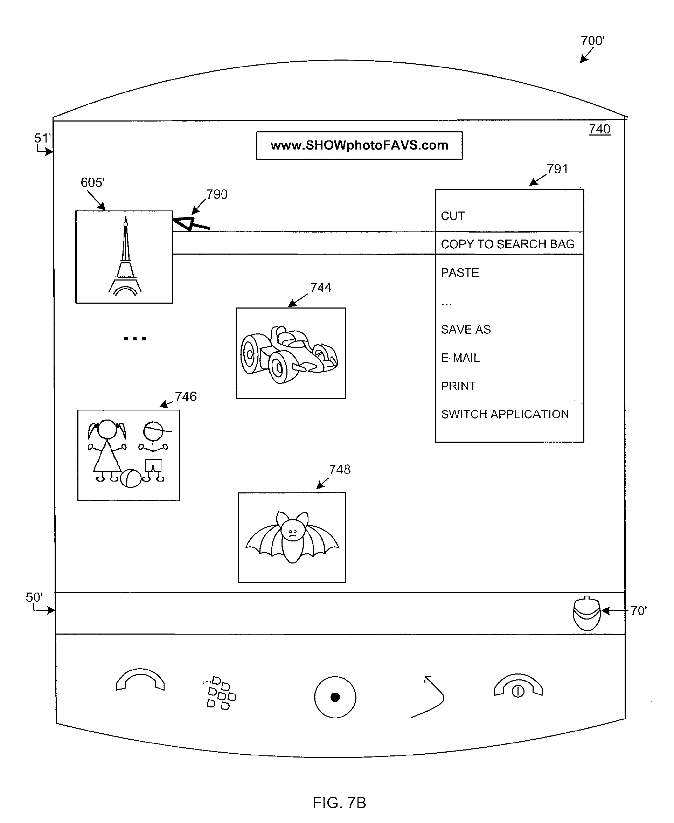

As discussed above, a multimedia object 409 may be selected for use by the query generating module **422** in a variety of ways. **FIGS. 7B to 7D** illustrate various ways of selecting and providing multimedia objects **409** to the searching system **400.** **FIG. 7B** shows a mobile device **700**' with the website **740** being displayed. One way to select a multimedia object, such as the JPEG image is by copying the object. In this example, a mouse cursor **790** may be used to select a multimedia object to generate a drop down list of options **791**.

In embodiments where the searching system **400** is implemented as a web browser **401** or a plug-in to a web browser, the searching system **400** may be configured to present a customized drop down list of options where one of the options enables the selected multimedia object or a portion of the multimedia object to be downloaded to the searching system **400** automatically. Such an option may read 'Copy To Search Bag', as illustrated in **FIG. 7B**. The 'Copy To Search Bag' option may be configured in a way that the selected multimedia object or a portion of the multimedia object is automatically and transparently downloaded into the memory of the device containing the searching system **400**, such as RAM **106**, where the memory is automatically accessed by the searching system **400**. The downloaded object may be later on automatically and transparently deleted from the memory of the device containing the searching system **400** based on certain criteria, such as automatic deletion after a pre-determined interval of time, or manual deletion.

In some cases, it may be the combination of the 'Copy To Search Bag' option and other options, such as 'paste' that may result in the automatic downloading of the selected multimedia object.

The icon representing the searching system is shown as **70'** in a split screen implementation of the input interface **402** of the searching system 400, where the upper section of the split screen **51'** displays the website **740**, and the lower section of the split screen **50'** displays the icon **70'.**

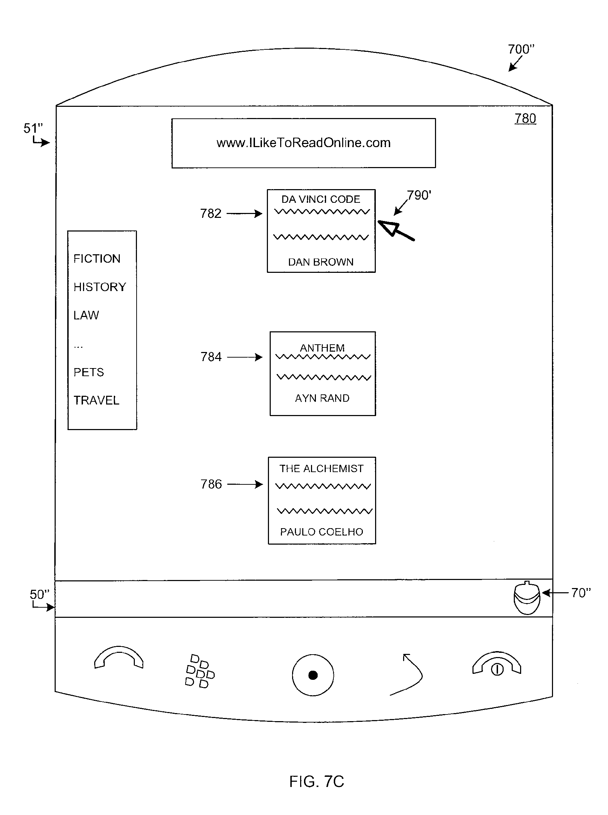

**FIG. 7C** shows a mobile device **700"** with the website **780** being displayed. This figure illustrates another possible way of selecting a multimedia object. What is shown in this figure is the dragging of a book cover thumbnail for the 'Da Vinci Code by Dan Brown' **782** using a mouse cursor **790**'. The multimedia object is received by the searching system **400** by dropping (not shown) the copied object to the icon representing the searching system **400**. Such an icon **70"** is shown in the split-screen implementation of the input interface **402** of the searching system **400**, where the upper section of the split screen **51"** displays the website **780**, and the lower section of the split screen 50" displays the icon **70"**.

In embodiments where the searching system **400** is implemented as a web browser **401** or a plug-in to a web browser, the selected multimedia object, such as the thumbnail **782**, may be dragged and dropped from any website into the icon representing the searching system **400** without any metadata loss. Likewise, when the multimedia objects **409** to be searched are already stored in the memory of the device containing the searching system **400**, such as a music or camera application on the mobile device **100**, the multimedia objects **409** may be easily dragged and dropped into the input interface of the searching system **400** along with the associated metadata.

In situations where the dragging and dropping of multimedia objects, such as the thumbnail **782**, from online websites into the input interface of the searching device **400** results only in the receipt of the web page link to the selected object, the searching system **400** may be configured to use that link to automatically and transparently download the multimedia object into the memory of the device containing the searching system **400**, such as RAM **106**.

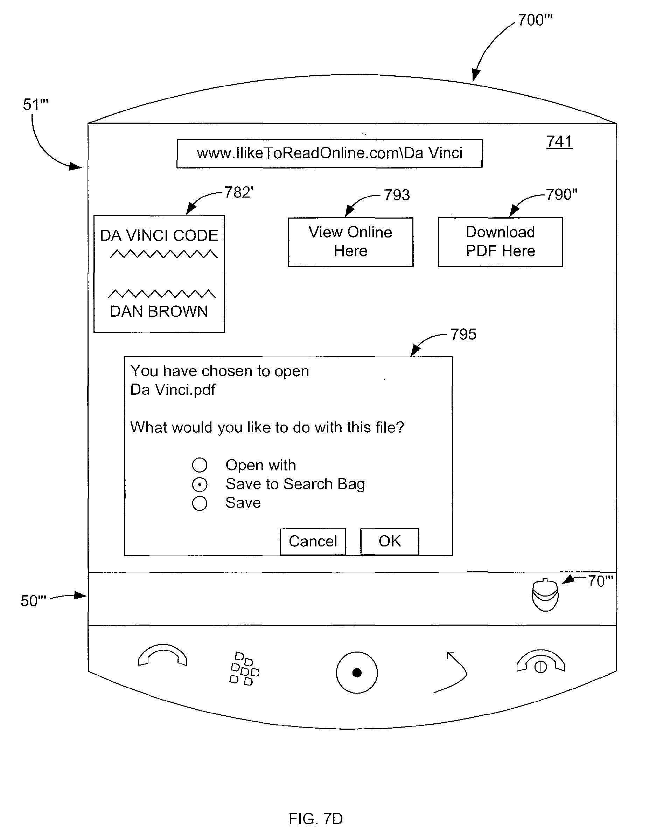

**FIG. 7D** illustrates another way of selecting a multimedia object. In this example, the mobile device **700'"** shows a web page **741** that is reached by clicking on the book cover thumbnail for the 'Da Vinci Code by Dan Brown' **782**. This web page includes the thumbnail of the selected book cover **782**' and some other options, such as a 'View Online Here' option **793** to view the actual book online, or a 'Download PDF Here' option **790"** to download the actual book in a PDF format.

In embodiments where the searching system **400** is implemented as a web browser **401** or a plug-in to a web browser, the selection of the "Download PDF Here" option **790"** may result in a dialog box, such as the box **795** in **FIG. 7D**. The searching system **400** may be configured to present a customized dialog box so that one of the options in the dialog box enables the selected multimedia object to be saved to the searching system **400** automatically. Such an option may read **'Save to Search Bag'**. In this embodiment, the selected multimedia object may be automatically downloaded into the memory of the device containing the searching system 400, such as RAM **106.** **FIG. 7D** illustrates a split screen implementation of the input interface **402** of the searching system **400**, where the upper section of the split screen **51"'** displays the website **741**, and the lower section of the split screen **50'"** displays the icon **70'"** representing the searching system **400**.

The icon representing the searching system **400** may be represented in any shape, wherein this representation is referred to as a search bag. The icon **70/70'/70"/70'"** representing the searching system **400** may be expanded or maximized to take up the entire display **110** of the mobile device **110**. This may be done by simply clicking on the icon **70/70'/70"/70"'**. In **FIGS, 8 to 10**, a search bag **705** is illustrated in the shape of a martini shaker. However, the search bag **705** may be in any other shape, such as a blender, a cocktail mixer etc.

**FIG. 8** shows the search bag **705**, in a mobile device **800**, in the shape of a cocktail mixer with all the selected multimedia objects **809**. It is assumed that the following has been selected for the search: an audio clip in MP3 format, titled ABBA-Sos **712**', a PDF document titled Da Vinci.pdf **782**" and a JPEG image file of the Eiffel Tower **605**". **FIG. 8** also shows boxes in dotted lines indicating the metadata that has been extracted by the metadata determining module **422** of the searching system **400**.

In some examples, as illustrated in **FIG. 8**, the metadata determining module **422** may be configured to only extract the following entries: the 'Artist Name' and the 'Album Name' for an audio file in MP3 format, as shown in box **812**, the 'Name' and the 'Author' for a PDF document, as shown in box **882**, and the 'Name' for a JPEG image file, as shown in box **805**. In some other examples, the metadata determining module **422** may be configured to extract other combinations of metadata entries for various selected multimedia objects **809.**

As noted previously, such extracted metadata may be utilized by the query generating module **422** of **FIG. 4** to generate a search query. The query generating module **422** may be operatively coupled to the metadata determining module **412** to receive the generated metadata.

With the increasing number of websites in place, a search query that is not well created can result in a huge list of search results, sorting through which to find relevant information may be time consuming. Implementing techniques that narrow the search results and display the most relevant web pages on top of the return list can curb this problem.

Internet search engines have evolved to provide for ways to optimize searches. Some techniques may include selection of proper keywords to be searched, use of Boolean operators (such as AND, OR etc.), use of implied Boolean operators (such as '+', '-' etc.) and use of quotation marks or round brackets for phrase searching (for instance, "Barack Obama", (Stephen Harper) etc.). Some other less well known parameters usable to narrow search results include special terms such as title, URL etc., where use of the phrase 'title' in a search query narrows the results to web pages where the keyword being searched appears in the title and use of the phrase 'URL' in the search query narrows the results to web pages where the keyword appears in the URL or website address.

**FIG. 9** illustrates a search query **950** generated using the metadata contained in the multimedia objects **809** received by the search bag **705**, as shown in **FIG.8****.** The query generating module **422** may generate a search query by only using Boolean commands, such as AND and OR etc. The query generating module **422** may also generate search queries by using specialized search terms such as title, URL etc. **FIG. 9** illustrates an example of a simple search query, generated by the query generating module **422**, using Boolean commands and quotation marks.

In some embodiments, the query generating module **422** may be triggered to create or generate a search query as soon as one or more multimedia objects **409** are selected and provided to the searching system **400** via the search bag **705**. In this embodiment, the search query gets updated every time a new multimedia object is selected and provided to the searching system **400**. In other embodiments, the searching system **400** may be operating on a portable device, such as the mobile device **100**, and may include a motion detector **425** configured to detect certain exaggerated movement of the portable device, such as the shaking the portable device. In this embodiment, the query generating module **422** may be configured to generate a search query upon the detection of the movement, such as shaking, of the portable device. The user may shake the device upon concluding the selection of all the multimedia objects that the user desires to search. A motion detector may contain electronic sensors or a physical mechanism to detect motion. The motion detector may include an accelerometer.

The searching system **400** may also include a communication module **432** coupled to the query generating module **422**, as illustrated in **FIG. 4** using dotted lines. The communication module may be configured to communicate the generated search query to one or more search engines.

The search engine may be an external search engine such as an Internet search engine as discussed above (for example, Google™, Bing™ etc.). The search queries may be communicated to the Internet search engines via the network **200**. The search engine may also include an internal search engine, such as internal applications or databases on the mobile device **100**. Some examples of internal applications may include e-mail, calendar, address book and text messaging etc.

In some cases, since not all search engines support the same search query syntax, the query generating module **422** may be configured to produce search queries in syntax suitable for the respective search engines.

In some examples, the generated search query may be displayed to the user for approval before the search query is communicated to the search engines. As illustrated in **FIG. 9**, the user may accept the search query **950** by selecting the ACCEPT button **960**. In this example, the user may also have available the option of selecting the search engine on which the search is desired to be carried out (not shown). The user may also have the option of modifying the generated search query. As illustrated in **FIG. 9**, the user may modify the search query **950** by selecting the MODIFY button **970**. In some other examples, the user may also be able to cancel the search query. This may be done if the user decides to restart a search or does not want to carry out a search anymore. As illustrated in **FIG. 9**, the user may cancel the search by selecting the CANCEL button **980**.

In situations where the searching system **400** is configured for operation on a portable device, such as the mobile device **100**, and where the portable device includes a motion detector **425** to detect an exaggerated movement of the device, such as shaking, the communication module **432** may be configured to communicate the generated search query to a search engine upon the detection of the movement of the portable device, without any manual trigger such as the selection of, for example, the ACCEPT button **960** described above.

The generated search query may be displayed to the user using a display box **920** as shown in **FIG. 9**. The display box may be provided with a scroller 921 allowing the user to scroll up or down to view the entire area of the display box.

As shown in **FIG. 9**, in some implementations, the search bag **705'** may also display all the selected multimedia objects **809'** that have been selected for use in generating the search query **950**. The search bag **705'** may also be provided with a delete function, such as a delete button **925**, enabling a user to delete the multimedia objects that a user no longer wants searched.

In various embodiments, the communication module **432** may be further configured to receive one or more search results corresponding to the search query from the search engines. The search results may include one or more websites, word or PDF documents, excel files, powerpoint, images, maps, audio clips or video files. **FIG. 10** illustrates an example of the search results 1050 received from an Internet search engine, such as Google™, in response to the search query **950** from **FIG. 9****.**

The search results **1050** may be displayed on the display box **920'** of the search bag 705". The display box may be provided with a scroller **921'** allowing the user to scroll up or down to view the entire area of the display box. In some other cases, the search results may be outputted via other mediums, such as a printer or a speaker etc. The search bag **705"** may also be configured to display the selected multimedia objects **809**" to remind the user what the search results correspond to.

The searching system **400** may also include a filtering module **442** coupled to the communication module **432**. The filtering module **442** may be configured to filter the search results based on some filtering criteria. The filtering criteria may be pre-determined. Some default pre-determined criteria may include filtering of redundant search results. A default filtering criteria may also include content filter. A content filter is a technique used to block or allow content based on the analysis of the content of the retrieved search results.

The filtering criteria may be user customizable, or a combination of both the user selection and default settings. The user customizable filtering criteria may be used to further optimize the search results. In some Internet search engines, such as Google™, specifying some additional parameters such as file format, date, usage rights and region etc may further narrow the search results. File format parameter may be used to narrow the search results to yield certain file formats, such as Adobe Acrobat PDF (.pdf), Microsoft Excel (.xls), Microsoft Powerpoint (.ppt), Microsoft Word (.doc), Rich Text Format (.rtf), Adobe Postscript (.ps), Autodesk DWF (.dwf), Google Earth KML (.kml), Google Earth KMZ (.kmz) and Shockwave Flash (.swf). Usage rights parameter may be used to narrow the search according to rights such as free to use or share; free to use or share commercially; free to use, share or modify etc. Accordingly, the filtering module **442** of the searching system **400** may be configured to filter the search results according to parameters such as file formats, date of creation, country of origin etc.

In some embodiments, the filtering module **442** may be coupled to the query generating module **432**. In this embodiment, the filtering module **442** may be configured to allow users to select filtering criteria prior to the communication of search query to search engines. In other embodiments, the filtering module **442** may be configured to allow users to select filtering criteria after the receiving of search results from the search engines, but before their display to the user. In some other embodiments, the filtering module **442** may be configured to allow users to select filtering criteria after the display of the search results. In this embodiment, a narrower list of the search results is created from the previously displayed list.

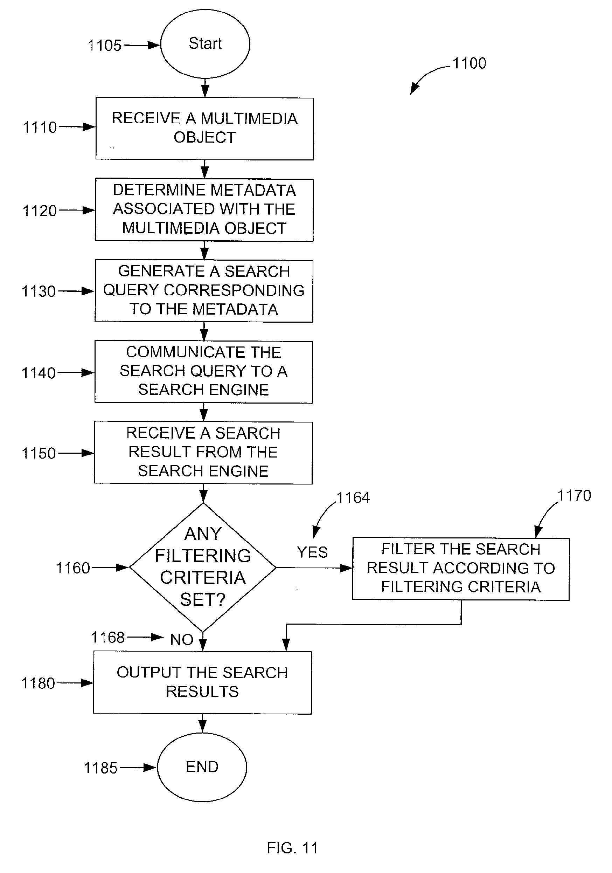

Referring to **FIG. 11****,** illustrating a flow chart of a method of generating a search according to an embodiment. The method may start (block 1105) with the receiving of selected multimedia objects **809,809',809"** (block 1110). As discussed above, a multimedia object may include an image file. It may also include an audio or a video clip. The method may then include determining metadata associated with the received multimedia objects **809,809',809"** (block **1120**). It should be understood that step **1120** may be performed as each multimedia object **809,809',809"** is selected, or after all multimedia objects **809,809',809"** have been selected. Next, a search query corresponding to the metadata associated with the selected multimedia objects **809,809',809"** may be generated (block **1130**). In some embodiments, the generation of a search query may be initiated with the selection of the first multimedia object **809,809',809"** and subsequently updated as the multimedia objects **809,809',809"** are further added or deleted. Alternatively, the steps of the method may be performed on a portable device, and the method may include detecting exaggerated movement of the device, such as shaking. In these embodiments, the device may be shaken after all the multimedia objects **809,809',809"** are selected and ready to be searched. Accordingly, the detection of the movement of the device may generate a search query and/or initiate the communication of the search query as discussed for block **1140**. As mentioned above, the portable device may include the mobile device **100.**

The generated search query may be communicated to one or more search engines (block **1140**). The search engines may include external Internet search engines such as Bing™, Google™, Yahoo™ etc. The search engines may also include internal search engines such as applications in the mobile device **100**. In some embodiments, the search query may be communicated to a search engine as soon as the generation of a search query at block **1130** is completed. In some other examples, the communication of the search query may be triggered upon the detection of the movement of the portable device, such as the mobile device **100.** Next, the search results may be received from the one or more search engines (block **1150**). The method may also include the step of filtering the search results based on filtering criteria. The filtering criteria may be pre-determined and set by default, or the criteria may be user customizable. The filtering criteria may also be a combination of both. If any filtering criteria are found to be selected **1164**, as determined in block **1160**, the search results may be filtered according to the filtering criteria (block **1170**). If no filtering criteria are selected **1168**, the search results do not undergo any filtering. Finally **1185**, the search results are outputted (block **1180**). In some examples, the search results may be presented to the user on the display **110** of the mobile device **100**. In some other examples, the search results may be provided via a printer. In other examples, the search results may be outputted through other media, such as speakers etc.

The steps of a method in accordance with any of the embodiments described herein may not be required to be performed in any particular order, whether or not such steps are described in the claims or otherwise in numbered or lettered paragraphs.

While the above description provides example embodiments, it will be appreciated that some features and/or functions of the described embodiments are susceptible to modification without departing from the spirit and principles of operation of the described embodiments. Accordingly, what has been described above is intended to be illustrative of the claimed concept and non-limiting.

## Claims

1. A method for generating a search, the method comprising:
(a) Receiving at least one multimedia object (409,605',782,809) from an input interface (402);
(b) Determining metadata associated with the multimedia object (409); and
(c) Generating a search query (950) corresponding to the metadata.

2. The method of claim 1, further comprising communicating the search query (950) to at least one search engine.

3. The method of claim 2, further comprising receiving at least one search result (1050) from the search engine, wherein the search result corresponds to the search query (950).

4. The method of claim 3, further comprising filtering the search result (1050) based on filtering criteria.

5. The method of any of claims 1 to 4, wherein the method is performed on a portable device, the method further comprising detecting movement of the device, wherein upon the detection of the movement, the search query (950) is generated.

6. The method of any of claims 2 to 4, wherein the method is performed on a portable device, the method further comprising detecting movement of the device, wherein upon the detection of the movement, the search query (950) is communicated to the search engine.

7. The method of any of claims 1 to 6, wherein the multimedia object (409,605',782,809) comprises a graphic object.

8. The method of any of claims 2 to 4, wherein the search engine comprises an internal search engine.

9. A searching system (400) comprising:
(d) a processor (404) configured to control operations of the searching system;
(e) an input interface (402), configured to select at least one multimedia object (409,605',782,809);
(f) a metadata determining module (412) configured to determine metadata associated with the multimedia object; and
(g) a query generating module (422) configured to generate a search query (950) corresponding to the metadata.

10. The system of claim 9, further comprising a communication module (432) coupled to the query generating module (422), wherein the communication module is configured to communicate the search query (950) to at least one search engine.

11. The system of claim 10, wherein the communication module (432) is further configured to receive at least one search result (1050) corresponding to the search query (950).

12. The system of claim 11, further comprising a filtering module (442) coupled to the communication module (432), wherein the filtering module is configured to filter the search result (1050) based on filtering criteria.

13. The system of any of claims 9 to 12, wherein the system is configured for operation on a portable device, the system further comprising a motion detector (425) configured to detect movement of the device, wherein upon the detection of the movement, the query generating module (422) is configured to generate the search query (950).

14. The system of any of claims 10 to 12, wherein the system is configured for operation on a portable device, the system further comprising a motion detector (425) configured to detect movement of the device, wherein upon the detection of the movement, the communication module (432) is configured to communicate the search query (950) to at least one search engine.

15. The system of any of claims 9 to 14, further comprising a web browser (401).

## Amended claims

### Amended claims in accordance with Rule 137(2) EPC.

**1.** A method for generating a search, the method comprising:
(a) Receiving (1110) at least one multimedia object (409,605',782,809) from an input interface (402);
(b) Determining (1120) metadata associated with the multimedia object (409);
(c) Generating (1130) a search query (950) corresponding to the metadata; and
(d) Communicating (1140) the search query (950) to an Internet search engine.

**2.** The method of claim 1, further comprising receiving (1150) at least one search result (1050) from the search engine, wherein the search result corresponds to the search query (950).

**3.** The method of claim 2, further comprising filtering (1160) the search result (1050) based on filtering criteria.

**4.** The method of any of claims 1 to 3, wherein the method is performed on a portable device (100), the method further comprising detecting movement of the device, wherein upon the detection of the movement, the search query (950) is generated.

**5.** The method of any of claims 1 to 3, wherein the method is performed on a portable device (100), the method further comprising detecting movement of the device, wherein upon the detection of the movement, the search query (950) is communicated to the search engine.

**6.** The method of any of claims 1 to 5, wherein the multimedia object (409,605',782,809) comprises a graphic object.

**7.** A searching system (400) comprising:
(a) a processor (404) configured to control operations of the searching system;
(b) an input interface (402), configured to select at least one multimedia object (409,605',782,809);
(c) a metadata determining module (412) configured to determine metadata associated with the multimedia object;
(d) a query generating module (422) configured to generate a search query (950) corresponding to the metadata; and
(e) a web browser.

**8.** The system of claim 7, further comprising a communication module (432) coupled to the query generating module (422), wherein the communication module is configured to communicate the search query (950) to at least one search engine.

**9.** The system of claim 8, wherein the communication module (432) is further configured to receive at least one search result (1050) corresponding to the search query (950).

**10.** The system of claim 9, further comprising a filtering module (442) coupled to the communication module (432), wherein the filtering module is configured to filter the search result (1050) based on filtering criteria.

**11.** The system of any of claims 7 to 10, wherein the system is configured for operation on a portable device (100), the system further comprising a motion detector (425) configured to detect movement of the device (100), wherein upon the detection of the movement, the query generating module (422) is configured to generate the search query (950).

**12.** The system of any of claims 8 to 10, wherein the system is configured for operation on a portable device (100), the system further comprising a motion detector (425) configured to detect movement of the device, wherein upon the detection of the movement, the communication module (432) is configured to communicate the search query (950) to at least one search engine.
